# FASCICULE DE BREVET EUROPEEN

(11) **EP 2 688 142 B1**
(45) Date de publication et mention de la délivrance du brevet: **11.12.2019**
(21) Numéro de dépôt: 13176686.7
(22) Date de dépôt: 16.07.2013
(51) Int. Cl.: H01Q 1/28, H01Q 25/00, H01Q 21/06, H01Q 19/17, H01Q 19/13, H04B 7/185, H01Q 13/02

(54) **Antenne d'émission et de réception multifaisceaux à plusieurs sources par faisceau, système d'antennes et système de télécommunication par satellite comportant une telle antenne**
Mehrfachstrahl-Sende- und Empfangsantenne mit mehreren Quellen pro Strahl, Antennensystem und Satellitentelekommunikationssystem, die eine solche Antenne umfassen
Multi-beam transmission and reception antenna with a plurality of sources per beam, antenna system and satellite telecommunication system comprising such an antenna

(30) Priorité: 20.07.2012 FR 1202061
(43) Date de publication de la demande: 22.01.2014
(73) Titulaire: Thales, 92400 Courbevoie (FR)
(72) Inventeur: Bosshard, Pierre, 31170 Tournefeuille (FR); Lepeltier, Philippe, 31320 Castanet Tolosan (FR); Pressense, Judicaël, 31500 Toulouse (FR); Charrat, Bernard, 31037 Toulouse Cedex 1 (FR)
(74) Mandataire: Esselin, Sophie

(56) Documents cités:
- EP-A1- 2 202 839
- EP-A2- 2 099 142
- GB-A- 2 189 080
- MICHAEL SCHNEIDER ET AL: "Antennas for multiple spot beam satellites", CEAS SPACE JOURNAL, SPRINGER WIEN, AUSTRIA , vol. 2, no. 1-4 10 août 2011 (2011-08-10), pages 59-66, XP002674197, ISSN: 1868-2502, DOI: 10.1007/S12567-011-0012-Z Extrait de l'Internet: URL:http://www.springerlink.com/content/p6 868277636x5030/fulltext.pdf [extrait le 2011-08-10]

## Description

La présente invention concerne une antenne d'émission et de réception multifaisceaux à plusieurs sources par faisceau (en anglais : Multiple Feeds Per Beam), un système d'antennes d'émission et de réception à formation de faisceaux contigus et un système de télécommunication par satellite comportant un tel système d'antenne. Elle s'applique notamment au domaine des télécommunications par satellite et en particulier à l'optimisation des ressources d'un satellite par réutilisation de fréquence dans un schéma dit à quatre couleurs.

Les antennes multifaisceaux considérées sont composées d'au moins un réflecteur, par exemple un paraboloïde asymétrique à alimentation décalée par rapport aux faisceaux rayonnés appelé paraboloïde offset, et d'un réseau de sources primaires placées au foyer du réflecteur. Chaque source primaire est constituée d'un élément rayonnant, par exemple de type cornet ou de tout autre type connu, et d'une chaîne radiofréquence RF alimentant l'élément rayonnant.

Dans le cas classique, à chaque source du réseau focal correspond un faisceau fin rayonné par l'antenne et une zone de couverture au sol appelée spot. Il est possible d'obtenir un rayonnement de l'antenne par faisceaux multiples si les faisceaux élémentaires sont découplés les uns par rapport aux autres, le découplage pouvant être spatial ou obtenu par l'utilisation de polarisations orthogonales ou de fréquences différentes entre deux faisceaux adjacents comme décrit par exemple dans le document EP 2 099 142. Les lois géométriques permettent de projeter les couvertures terrestres souhaitées dans le plan focal de l'antenne et de positionner correctement le centre de phase de chaque source primaire correspondant à chaque spot. Lorsque la couverture est composée de spots régulièrement disposés au sol, l'écart entre deux spots adjacents impose directement l'espace séparant deux sources adjacentes dans le plan focal.

L'élaboration d'un grand nombre de faisceaux fins contigus implique de réaliser une antenne comportant un grand nombre d'éléments rayonnants élémentaires, placés dans le plan focal d'un réflecteur parabolique. Dans le cas d'une antenne classique en configuration SFPB (en anglais : Single Feed Per Beam) correspondant à une source par faisceau, le volume alloué pour l'emplacement d'une chaîne radiofréquence RF chargée d'assurer les fonctions d'émission et de réception en bipolarisation circulaire est borné par la surface radiative d'un élément rayonnant.

Dans cette configuration où chaque source, constituée d'un élément rayonnant couplé à une chaîne radiofréquence, élabore un faisceau, chaque faisceau formé est émis par exemple par un cornet dédié constituant l'élément rayonnant élémentaire et la chaîne radiofréquence réalise, pour chaque faisceau, les fonctions émission/réception en mono-polarisation dans une bande de fréquences choisie en fonction des besoins des utilisateurs. Pour obtenir une bonne efficacité de rayonnement des spots, les cornets des réseaux rayonnants doivent bénéficier d'un espace suffisant leur permettant d'être suffisamment directifs afin d'éclairer le bord des réflecteurs avec des niveaux suffisamment bas et permettre ainsi de limiter les pertes par débordement (en anglais : spill over). Les spots étant entrelacés, l'espace entre deux sources d'une antenne peut ne pas être compatible avec les dimensions physiques des cornets pour atteindre les performances radiofréquence souhaitées. Par exemple cela est le cas pour des tailles de spots inférieures à 1°. Pour résoudre ce problème, il est généralement choisi d'utiliser trois ou quatre antennes différentes qui réalisent chacune un tiers, ou respectivement un quart de la couverture. Ainsi, deux spots adjacents de la couverture ne sont pas réalisés par la même antenne. Lorsqu'il n'y a pas de contrainte d'aménagement du réseau d'antennes, cette configuration permet généralement d'obtenir des performances d'antennes très efficaces. Cependant, lorsque le diamètre des faisceaux diminue, les contraintes géométriques augmentent et il n'est pas possible d'avoir un espace suffisant pour implanter chaque cornet malgré le partage de la couverture sur trois ou quatre antennes. Pour des spots très fins de taille comprise entre 0,2° et 0,4°, l'espace alloué à chaque source du réseau focal devient très faible et le réflecteur est vu par chaque source du réseau focal sous un angle sous-tendu ne permettant pas aux sources de produire la directivité suffisante pour éviter les pertes par débordement.

Une deuxième configuration d'antenne permettant d'élaborer un grand nombre de faisceaux fins contigus est d'utiliser un système de deux antennes en configuration MFPB (en anglais : Multiple Feed Per Beam) utilisant plusieurs sources par faisceau, comme décrit par exemple dans le document « antennas for multiple spot beam satellites », MICHAEL SCHNEIDER et Al, CEAS SPACE JOURNAL, SPRINGER WIEN, AUSTRIA, vol.2, no.1-4, 10 août 2011, pages 59-66. Généralement, la première antenne Tx fonctionne à l'émission, la seconde antenne Rx fonctionne à la réception, et pour chaque antenne, chaque faisceau est formé en combinant les signaux issus de plusieurs sources élémentaires adjacentes, certaines de ces sources étant réutilisées pour élaborer des faisceaux contigus. Une efficacité de rayonnement satisfaisante est obtenue grâce à la réutilisation des sources qui participent à la formation de plusieurs faisceaux, ce qui permet d'augmenter la surface radiative allouée à chaque faisceau et de diminuer les pertes par débordement. Lorsque les sources sont partagées entre plusieurs faisceaux de même fréquence et de même polarisation, il est possible de créer une condition d'indépendance entre les faisceaux partageant des éléments rayonnants en imposant la formation de lois dites orthogonales. L'orthogonalité est réalisée en utilisant des coupleurs directifs qui isolent deux à deux les circuits de distribution du réseau de formation de faisceaux BFN (en anglais : Beam Forming Network) qui partagent les mêmes éléments rayonnants. Cependant, les contraintes d'orthogonalité provoquent une déformation des diagrammes de rayonnement des antennes et une augmentation des pertes ohmiques des circuits de recombinaison liée à la complexité des circuits de distribution. Les pertes cumulées sont souvent importantes, c'est-à-dire de l'ordre de 1dB. En outre, il est nécessaire de limiter la complexité des formateurs de faisceau à un taux de réutilisation de deux éléments rayonnants par spot. Ceci conduit à séparer physiquement les circuits de combinaison de deux faisceaux adjacents d'une distance correspondant à deux éléments rayonnants adjacents. Pour des spots ayant un écart angulaire compris entre 0.2° et 0.3°, la longueur focale apparente peut être très importante, par exemple de l'ordre de 10 mètres. Enfin, la réutilisation des sources lors de l'élaboration de deux faisceaux adjacents présente des inconvénients majeurs liés à l'encombrement des circuits de combinaison, à la masse du formateur de faisceau et à la complexité de la formation des lois d'amplitude et de phase de chaque antenne. En effet, pour une réutilisation de deux sources par polarisation, le nombre de chaînes radiofréquence RF élémentaires augmente d'un facteur supérieur à quatre avec le nombre de spots à former. Ainsi, pour 100 spots, il faut un nombre de chaînes RF supérieur à 400 éléments rayonnants ce qui nécessite une surface dans le plan focal, de l'ordre de 500mm^{∗}500mm. La masse et le volume du formateur de faisceaux deviennent alors ingérables.

Il est connu du document GB 2 189 080 de réaliser une antenne microstrip à plusieurs sources par faisceaux fonctionnant en émission et en réception dans deux sens de polarisations circulaires, cependant, cette antenne ne permet qu'un fonctionnement à deux couleurs, ne réalise le partage des sources que dans une seule direction de l'espace et ne permet donc pas un bon recouvrement des faisceaux dans les deux directions de l'espace.

Il est connu du brevet FR 2 939 971 de réaliser une chaîne radiofréquence très compacte en utilisant un OMT dissymétrique à deux branches associé à un coupleur à branches déséquilibré. Cette chaîne radiofréquence fonctionne en bi-polarisation à l'émission et à la réception et comporte des composants radiofréquence et des circuits de combinaison dont l'encombrement ne dépasse pas le diamètre du cornet.

Le but de l'invention est de réaliser une antenne d'émission et de réception multifaisceaux à plusieurs sources par faisceau et un système d'antennes d'émission et de réception à formation de faisceaux contigus ne comportant pas les inconvénients des systèmes d'antennes existants, permettant de s'affranchir de l'utilisation de BFN orthogonaux pour l'élaboration de faisceaux adjacents, et permettant d'obtenir un grand nombre de faisceaux fins contigus ayant une ouverture angulaire comprise entre 0,2° et 0,4°, avec un bon recouvrement des zones de couverture au sol, appelées spots, correspondant à chaque faisceau, tout en diminuant le nombre et l'encombrement des antennes.

Pour cela, l'invention concerne une antenne d'émission et de réception multifaisceaux à plusieurs sources par faisceau comportant au moins un réflecteur et un réseau de plusieurs sources illuminant le réflecteur, les sources étant associées en plusieurs groupes décalés les uns par rapport aux autres selon deux directions X, Y d'un plan, chaque source comportant un élément rayonnant relié à une chaîne radiofréquence. Chaque source comporte un premier et un deuxième port d'émission de même fréquence F1 et à polarisations orthogonales entre elles et un premier et un deuxième port de réception de même fréquence F2 et à polarisations orthogonales entre elles. Les sources sont associées par groupes de quatre sources adjacentes selon les directions X et Y. Pour chaque groupe de quatre sources adjacentes, les premiers ou les deuxièmes ports d'émission, et les premiers ou les deuxièmes ports de réception, correspondant à un même couple de valeur de fréquence et de polarisation, sont reliés deux à deux selon la direction X puis deux à deux selon la direction Y, les quatre ports d'émission reliés entre eux formant un faisceau d'émission et les quatre ports de réception reliés entre eux formant un faisceau de réception.

Avantageusement, deux groupes consécutifs adjacents selon la direction X peuvent être espacés d'un premier pas L1 correspondant à une source selon la direction X et partager deux sources en commun, deux groupes consécutifs adjacents selon la direction Y peuvent être espacés d'un deuxième pas L2 correspondant à deux sources selon la direction Y et ne partager aucune source en commun, chaque groupe de quatre sources formant un faisceau d'émission et un faisceau de réception.

Alternativement deux groupes consécutifs adjacents selon la direction X peuvent être espacés d'un premier pas L1 correspondant à une source selon la direction X et deux groupes consécutifs adjacents selon la direction Y peuvent être espacés d'un deuxième pas L2 correspondant à une source selon la direction Y, chaque groupe de quatre sources formant un faisceau d'émission et un faisceau de réception,

Avantageusement, pour la formation de chaque faisceau, les liaisons entre les ports d'émission ou de réception d'un groupe de quatre sources sont réalisées par des circuits de distribution, les circuits de distribution dédiés à la formation de faisceaux différents étant indépendants entre eux.

Avantageusement, pour le premier des deux groupes de sources, les premiers ports d'émission, respectivement les premiers ports de réception de même polarisation, sont reliés deux à deux selon la direction X puis deux à deux selon la direction Y et pour le second des deux groupes, les seconds ports d'émission, respectivement les seconds ports de réception de même polarisation, sont reliés deux à deux selon la direction X puis deux à deux selon la direction Y.

L'invention concerne également un système d'antennes d'émission et de réception à formation de faisceaux contigus comportant deux antennes d'émission et de réception, les deux antennes d'émission et de réception ayant des directions de pointage identiques selon une première direction U de l'espace et décalées angulairement selon une deuxième direction V de l'espace.

Avantageusement, le décalage angulaire entre les directions de pointage des deux antennes d'émission et de réception correspond à un décalage, égal à un spot, des lignes de spots formées au sol par les deux antennes.

L'invention concerne aussi un système de télécommunication par satellite comportant au moins un système de deux antennes d'émission et de réception.

D'autres particularités et avantages de l'invention apparaîtront clairement dans la suite de la description donnée à titre d'exemple purement illustratif et non limitatif, en référence aux dessins schématiques annexés qui représentent :
- figure 1a : un schéma d'un exemple de source d'émission et de réception, selon l'invention ;
- figure 1b : un schéma en section transversale illustrant les quatre ports de la source d'émission et de réception de la figure 1a, selon l'invention ;
- figure 1c : un schéma d'un exemple de chaîne radiofréquence fonctionnant en bi-polarisation à l'émission et à la réception, selon l'invention ;
- figure 2a : un schéma illustrant un système de deux antennes d'émission et de réception à formation de faisceaux contigus, selon l'invention;
- figure 2b : un schéma illustrant un exemple de couverture au sol réalisée par le système de deux antennes d'émission et de réception à formation de faisceaux contigus, selon l'invention;
- figure 3: un schéma d'un premier exemple de configuration des groupes de quatre sources de chaque antenne d'émission et de réception avec un partage de deux sources entre deux groupes adjacents selon une direction X du réseau de sources, aucun partage de source selon la direction Y, dans le cas d'un arrangement des sources dans un réseau à maille hexagonale et dans le cas où les directions X et Y font un angle différent de 90° entre elles, les sources n'étant pas représentées pour simplifier le schéma, selon l'invention ;
- figure 4 : un schéma illustrant un premier niveau de distribution reliant deux à deux, selon la direction X, des ports des sources d'une antenne d'émission et de réception, selon l'invention ;
- figure 5 : un schéma illustrant un deuxième niveau de distribution reliant deux à deux, selon la direction Y, des ports des sources d'une antenne d'émission et de réception, selon l'invention.
- figure 6a : un schéma de configuration des groupes de quatre sources de chaque antenne d'émission et de réception avec un partage d'une seule source entre deux groupes adjacents selon la direction X et entre deux groupes adjacents selon la direction Y, dans le cas d'un arrangement des sources dans une maille hexagonale et dans le cas où les directions X et Y font un angle de 90° entre elles, selon l'invention ;
- figure 6b : un exemple de couverture obtenue avec deux antennes ayant la configuration de la figure 6a, selon l'invention ;
- figure 7a : un schéma de configuration des groupes de quatre sources de chaque antenne d'émission et de réception avec un partage d'une seule source entre deux groupes adjacents selon la direction X et entre deux groupes adjacents selon la direction Y, dans le cas d'un arrangement des sources dans une maille carrée, les deux directions X et Y faisant un angle de 90° entre elles, selon l'invention ;
- figure 7b : un schéma d'un cas particulier d'antenne correspondant à la figure 7a, selon l'invention.
- figure 7c : un exemple de couverture obtenue avec une seule antenne ayant la configuration correspondant au cas particulier de la figure 7b, selon l'invention.

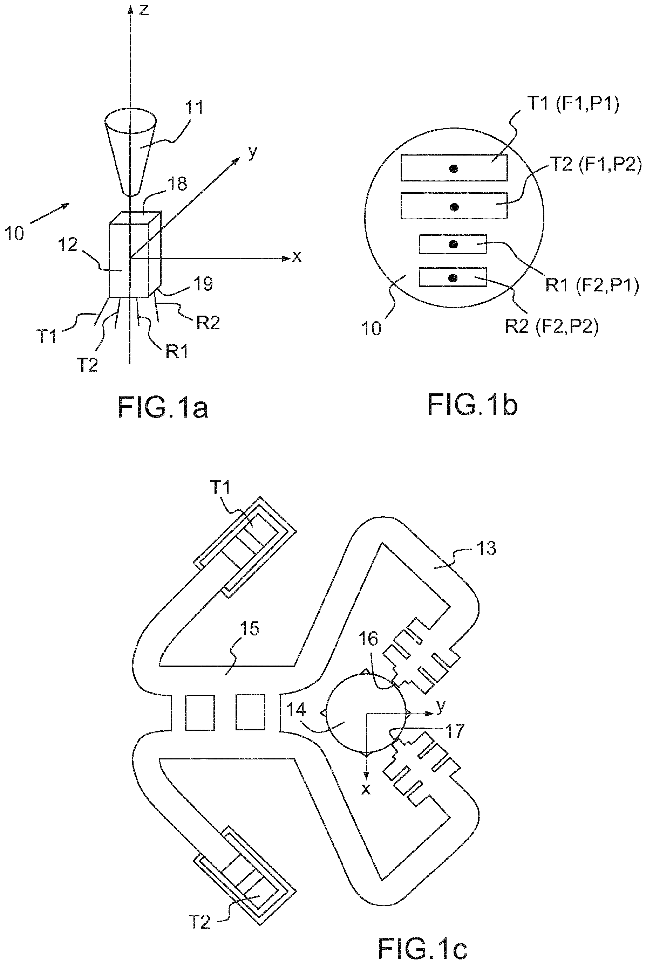

La figure 1a représente un exemple de source d'émission et de réception selon l'invention. La source d'émission et de réception 10 est constituée d'un élément rayonnant 11 par exemple de type cornet et d'une chaîne radiofréquence 12 connectée au cornet 11. La chaîne radiofréquence 12 représentée en coupe transversale sur la figure 1c, est une chaîne de nouvelle génération à encombrement réduit qui fonctionne en bi-polarisation à l'émission et à la réception. A l'émission, la chaîne radiofréquence 12 comporte deux ports T1, T2 d'émission et à la réception, la chaîne radiofréquence comporte deux ports R1, R2 de réception, les quatre ports T1, T2, R1, R2, représentés en section transversale sur la figure 1b, étant reliés à l'élément rayonnant 11 par l'intermédiaire de composants radiofréquence et de circuits de combinaison 13. La source 10 est schématisée par un cercle entourant les quatre ports sur la figure 1b. Les composants radiofréquence comportent un excitateur compact 14, par exemple un transducteur orthomode connu sous l'acronyme OMT (en anglais : Ortho Mode Transducer), à section circulaire ou carrée, couplé à un coupleur à branches 15 par l'intermédiaire de deux fentes de couplage 16, 17, espacées d'un angle de 90°, aménagées dans la paroi, ou les parois, longitudinale de l'excitateur 14. Les deux ports T1, T2 d'émission sont connectés à deux branches différentes du coupleur à branches 15. L'excitateur 14 s'étend longitudinalement selon un axe Z entre deux extrémités opposées 18, 19 situées selon l'axe longitudinal Z. L'élément rayonnant 11 par exemple de type cornet, est connecté à une première extrémité 18 de l'excitateur 14 et les deux ports de réception R1, R2 sont connectés à une deuxième 19 extrémité de l'excitateur 14. L'OMT alimente le cornet 11 (en transmission), ou est alimenté par le cornet 11 (en réception), sélectivement soit avec un premier mode électromagnétique présentant une première polarisation, soit avec un second mode électromagnétique présentant une seconde polarisation orthogonale à la première. Les première et seconde polarisations, auxquelles sont associées deux composantes de champs électriques, sont linéaires et appelées respectivement polarisation horizontale et polarisation verticale.

Les deux ports T1, T2 d'émission, de même que les deux ports R1, R2 de réception, fonctionnent dans deux polarisations orthogonales entre elles, par exemple, des polarisations circulaires droite et gauche ou deux polarisations linéaires orthogonales entre elles. En utilisant un OMT dissymétrique à deux branches associé à un coupleur à branches déséquilibré 15, comme décrit dans le document FR 2 939 971, la source 10 est très compacte et l'encombrement des composants radiofréquence et des circuits de combinaison de la chaîne radiofréquence 12 ne dépasse pas le diamètre du cornet 11, c'est-à-dire environ 30mm. Pour une antenne comportant un réseau de cornets identiques arrangés régulièrement, chaque chaîne radiofréquence dédiée à chaque cornet entre dans une maille hexagonale de dimensions voisines de 30mm correspondant au diamètre du cornet.

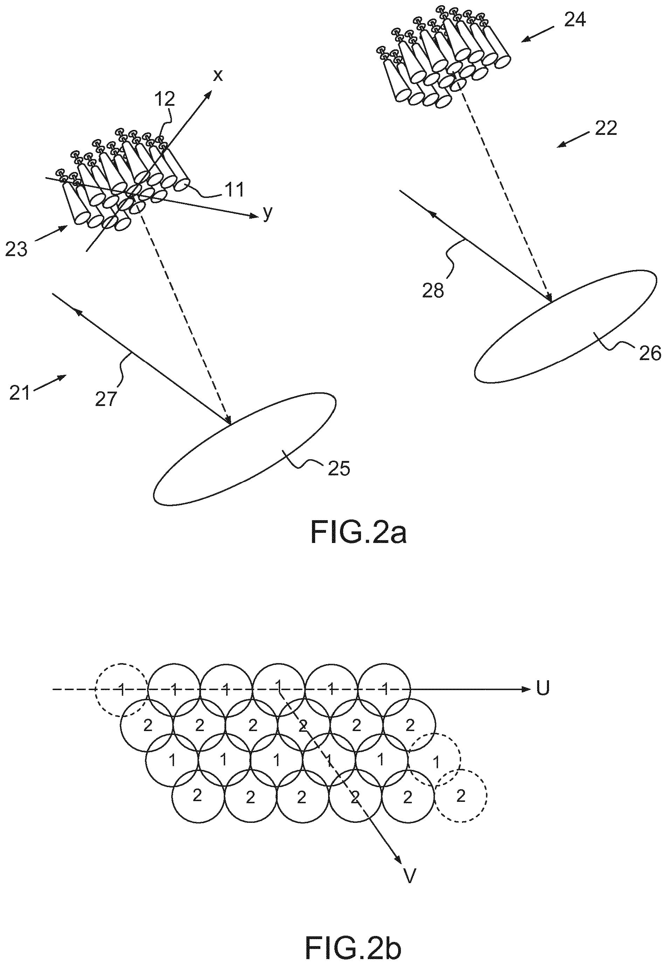

La figure 2a illustre un système d'antennes d'émission et de réception à formation de faisceaux contigus, selon l'invention. Le système d'antennes comporte deux antennes 21, 22, chaque antenne fonctionnant en émission Tx et en réception Rx, les fréquences d'émission F1 étant différentes des fréquences de réception F2. Les deux antennes 21, 22 comportent chacune un réseau rayonnant 23, 24, chaque réseau rayonnant 23, 24 comportant plusieurs sources organisées selon deux directions X et Y d'un plan. Chaque source comporte un élément rayonnant 11 connecté à une chaîne radiofréquence 12, deux ports d'émission T1, T2 et deux ports de réception R1, R2, les deux ports d'émission T1, T2 ayant des polarisations P1, P2 orthogonales entre elles et les deux ports de réception R1, R2 ayant des polarisations P1, P2 orthogonales entre elles. Les polarisations des ports d'émission T1, T2 et des ports de réception R1, R2 peuvent être par exemple linéaires ou circulaires. Différentes configurations optiques de l'antenne sont possibles, par exemple Grégorienne ou Cassegrain ou autre, et notamment l'antenne peut comporter un ou deux réflecteurs associés au réseau rayonnant. Sur la figure 2a, chaque antenne 21, 22 comporte un réflecteur parabolique respectif 25, 26 éclairé par le réseau rayonnant 23, 24 placé dans le plan focal du réflecteur parabolique de l'antenne 21, 22 correspondante. Chaque antenne pointe dans une direction de pointage respective 27, 28 vers une zone de couverture au sol choisie, par exemple une région, un pays, un ensemble de plusieurs pays, un continent, ou un autre territoire.

Lorsque le territoire à couvrir est de forme allongé et s'étend essentiellement selon une seule direction U de l'espace, comme par exemple le Chili, l'invention permet avantageusement, avec une seule antenne d'émission et de réception, de couvrir tout le territoire à l'émission et à la réception avec un bon recouvrement des spots réalisés au sol

Lorsque le territoire à couvrir s'étend selon deux directions U, V de l'espace terrestre, dans certaines configurations des sources de l'antenne, notamment lorsque les sources sont disposées selon une maille carrée, il est possible d'obtenir une couverture quasiment complète avec une seule antenne selon l'invention. Dans d'autres configurations, notamment lorsque les sources sont disposées selon une maille hexagonale, il peut être nécessaire de disposer de deux antennes d'émission et de réception de mêmes dimensions pour obtenir, à l'émission et à la réception, un bon recouvrement des spots selon les deux directions U, V. Dans le cas où deux antennes sont utilisées pour réaliser une couverture complète, la première antenne 21 est destinée à assurer l'ensemble de la couverture souhaitée, en émission et en réception, dans une première direction U de l'espace et une première moitié de la couverture souhaitée dans une deuxième direction V de l'espace. La deuxième antenne 22 est destinée à combler les trous de couverture de la première antenne 21, en émission et en réception, dans la deuxième direction V de l'espace pour assurer une deuxième moitié de la couverture souhaitée. Les deux antennes permettent alors de reconstituer la couverture complète souhaitée selon les directions U et V.

A titre d'exemple non limitatif, la figure 2b illustre un exemple de couverture réalisée par les deux antennes 21, 22. Les spots 1 correspondent à des zones de couverture au sol réalisées par la première antenne 21 et les spots 2 correspondent à des zones de couverture au sol réalisées par la deuxième antenne 22. Cette figure montre que selon la direction U, les spots 1 réalisés par la première antenne 21 se touchent avec un léger recouvrement entre deux spots 1 adjacents alors que selon la direction V, les spots 1 ne se touchent pas et présentent des trous de couverture. Les spots 2 réalisés par la deuxième antenne 22 constituent des lignes de spots 2 additionnelles, chaque ligne de spots 2 s'intercalant entre deux lignes de spots 1 consécutives et permettent ainsi de combler les trous de couverture de la première antenne 21. A titre d'exemple non limitatif, avec deux antennes comportant chacune 64 éléments rayonnants disposés selon une matrice de 8 lignes et 8 colonnes, les 128 éléments rayonnants des deux antennes permettant de former 42 spots contigus au sol selon deux directions de l'espace, avec un bon recouvrement des spots dans les deux directions de l'espace.

Pour chaque antenne 21, 22, chaque faisceau d'émission et chaque faisceau de réception, correspondant à un spot au sol, est formé par combinaison des signaux issus de quatre sources radiofréquence adjacentes disposées en matrice 2^{∗}2. Deux faisceaux adjacents sont formés par deux groupes adjacents selon une première direction X ou selon une deuxième direction Y du réseau de sources.

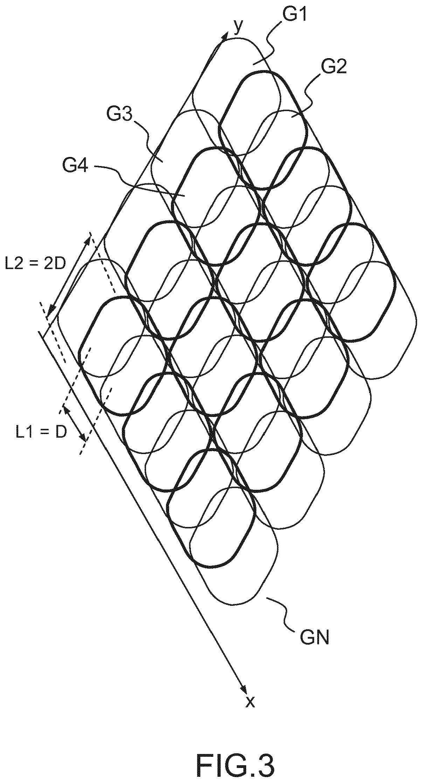

La figure 3 illustre un premier exemple de regroupement des sources radiofréquence 10 quatre par quatre dans le cas où les sources sont réparties en réseau selon une maille hexagonale, la même configuration pouvant également être réalisée avec un autre type de maille telle qu'une maille carrée par exemple. Dans cet exemple, les directions X et Y ne sont pas choisies perpendiculaires entre elles et peuvent par exemple faire un angle de 120° ou de 60°. Chaque groupe de quatre sources permet d'élaborer un faisceau d'émission et un faisceau de réception. Le dispositif de formation de faisceau ne comporte aucun coupleur mais uniquement des circuits de distribution constitués de guides d'onde reliant des ports de même couleur entre eux. Chaque faisceau est formé par des circuits de distribution dédiés, indépendants d'un faisceau à un autre faisceau. Les circuits de distribution fonctionnent à l'émission comme des combineurs de signaux et à la réception comme des diviseurs de signaux. Les circuits de distribution dédiés à la formation d'un faisceau d'émission, relient l'un des ports d'émission T1 ou T2 des quatre sources d'un même groupe quatre par quatre, les quatre ports d'émission reliés entre eux ayant une même couleur. De même, les circuits de distribution dédiés à la formation d'un faisceau de réception, relient l'un des ports de réception R1 ou R2 des quatre sources d'un même groupe quatre par quatre, les quatre ports de réception reliés entre eux ayant une même couleur. A l'émission et à la réception, deux faisceaux adjacents sont formés par deux groupes G1, G2 adjacents selon la direction X ou G1, G3 adjacents selon la direction Y, chaque groupe G1, G2, G3, G4, ...,GN étant constitués chacun de quatre sources 10, les deux groupes adjacents G1, G2 étant décalés d'un premier pas L1 correspondant à l'encombrement d'une source selon la première direction X de l'antenne, égal au diamètre D d'une source radiofréquence 10 sur la figure 3, et les deux groupes adjacents G1, G3 étant décalés d'un deuxième pas L2 correspondant à l'encombrement de deux sources selon la deuxième direction Y de l'antenne, égal au diamètre 2D de deux sources radiofréquence sur la figure 3. Ainsi, dans ce premier exemple, selon la direction X, les deux groupes G1, G2 de quatre sources radiofréquence qui participent à la formation de deux faisceaux adjacents partagent deux sources en commun alors que selon la direction Y, les deux groupes G1, G3 de quatre sources radiofréquence qui participent à la formation de deux faisceaux adjacents ne comportent aucune source en commun. Le partage des sources radiofréquence entre deux groupes adjacents n'est donc réalisé que dans une seule direction X de l'antenne, ce qui permet d'assurer, avec une seule antenne fonctionnant en émission et en réception, une couverture complète selon la première direction U de l'espace mais incomplète selon la deuxième direction V de l'espace. La deuxième antenne 22 permet d'élaborer, en émission et en réception des lignes de spots additionnelles 2 décalées selon la deuxième direction V de l'espace et de combler les trous de couverture de la première antenne 21, à l'émission et à la réception.

Les faisceaux formés par chaque antenne sont élaborés par un formateur de faisceaux comportant deux niveaux de distribution reliant, pour chaque groupe de quatre sources, les ports ayant la même couleur, c'est-à dire la même fréquence et la même polarisation. Ainsi, conformément à l'invention, chaque faisceau est avantageusement élaboré par des circuits de distribution dédiés et indépendants des circuits de distribution élaborant les autres faisceaux. Chaque faisceau est formé par un groupe de quatre sources en reliant, par des circuits de distribution dédiés, quatre ports des quatre sources entre eux, les quatre ports reliés ayant une même couleur, chaque couleur correspondant à un couple de valeur de fréquence et de polarisation (F1, P1), (F1, P2), (F2, P1), (F2, P2). Chaque groupe de quatre sources comporte ainsi quatre ports d'émission de même couleur reliés entre eux et permettant de former un faisceau d'émission et quatre ports de réception de même couleur reliés entre eux et permettant de former un faisceau de réception. Chaque source d'un même groupe comportant deux ports d'émission et deux ports de réception, un port d'émission et un port de réception restent disponibles pour la formation de deux autres faisceaux, respectivement d'émission et de réception, avec des sources d'un groupe adjacent.

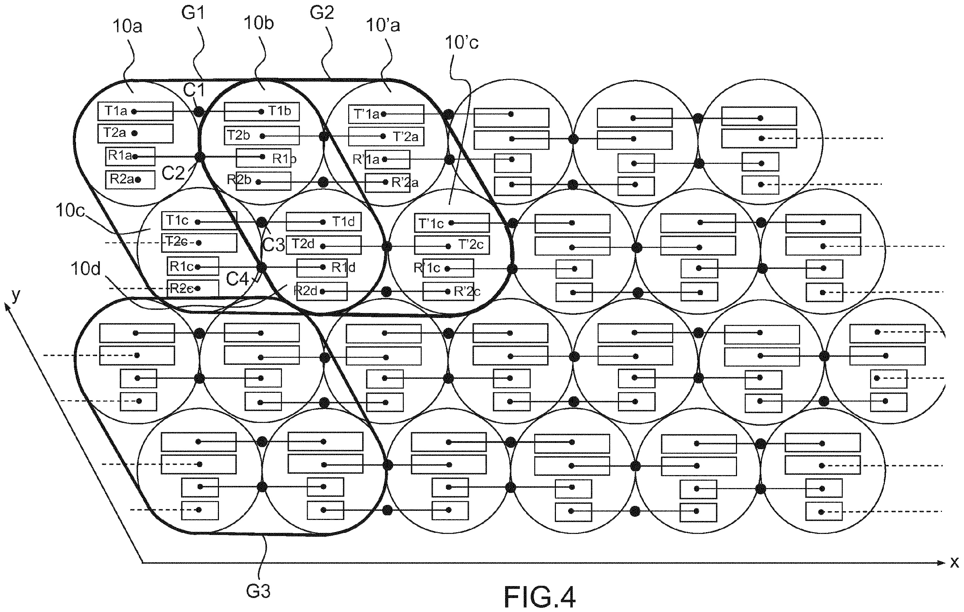

Un premier niveau de distribution est représenté sur la figure 4. Le premier niveau de distribution comporte, pour chaque groupe de quatre sources radiofréquence, deux premiers circuits de distribution C1, C2 reliant deux à deux les premiers ports d'émission T1a et T1b et de réception R1a, R1b des deux sources radiofréquence 10a, 10b adjacentes selon la direction X, et deux premiers circuits de distribution C3, C4 reliant deux à deux les premiers ports d'émission T1c et T1d et de réception R1c, R1d des deux sources radiofréquence 10c, 10d adjacentes selon la direction X, donc quatre premiers circuits de distribution C1 à C4 par groupe de quatre sources radiofréquence 10a, 10b, 10c, 10d. Les premiers circuits de distribution C1, C2 relient, deux à deux et selon la direction X, deux premiers ports T1a, T1b d'émission, respectivement deux premiers ports R1a, R1b de réception, des deux premières et secondes sources 10a, 10b adjacentes d'un même groupe G1 de quatre sources. Les deux premiers ports d'émission T1a, T1b reliés ont la même polarisation P1 et la même fréquence de fonctionnement F1, les deux premiers ports de réception R1a, R1b reliés, ont la même polarisation P1 et la même fréquence de fonctionnement F2. De même, les premiers circuits de distribution C3, C4 relient, deux à deux et selon la direction X, deux premiers ports T1c, T1d d'émission, respectivement deux premiers ports R1c, R1d de réception, de deux troisième et quatrième sources 10c, 10d adjacentes du même groupe G1 de quatre sources. Les deux premiers ports d'émission T1c, T1d reliés ont la même polarisation P1 et la même fréquence F1 de fonctionnement, les deux premiers ports de réception R1c, R1d reliés, ont la même polarisation P1 et la même fréquence F2 de fonctionnement.

Chaque source radiofréquence 10 a comportant quatre ports dont deux ports d'émission T1a, T2a et deux ports de réception R1a, R2a, à l'issue de la combinaison réalisée entre les premiers ports d'émission T1a, T1b, respectivement de réception R1a, R1b, reliés à deux sources radiofréquence adjacentes 10a, 10b du premier groupe G1 de quatre sources, les deux sources radiofréquences 10a, 10b comportent chacune un second port d'émission T2a, T2b et un second port de réception R2a, R2b libres qui peuvent à leur tour être respectivement reliés, selon la direction X, à un second port d'émission et à un second port de réception d'une source adjacente appartenant à un deuxième groupe G2 de quatre sources décalé du premier groupe G1 d'un pas L1 correspondant à une source. Par exemple, sur la figure 4, les quatre sources du deuxième groupe G2 sont les sources 10b, 10'a, 10d, 10'c. Les ports d'émission T2b et de réception R2b de la source 10b sont respectivement reliés aux ports d'émission T'2a et R'2a de la source 10'a et les ports T2d et R2d de la source 10d sont respectivement reliés aux ports T'2c et R'2c de la source 10'c. Les liaisons entre deux ports respectifs de deux sources adjacentes sont réalisées de la même façon pour l'ensemble des groupes de quatre sources jusqu'aux bords du réseau rayonnant. Les sources situées sur les bords du réseau rayonnant de l'antenne n'ont qu'une seule source adjacente et comportent chacune un port d'émission T2a, T2c et un port de réception R2a, R2c qui demeurent libres.

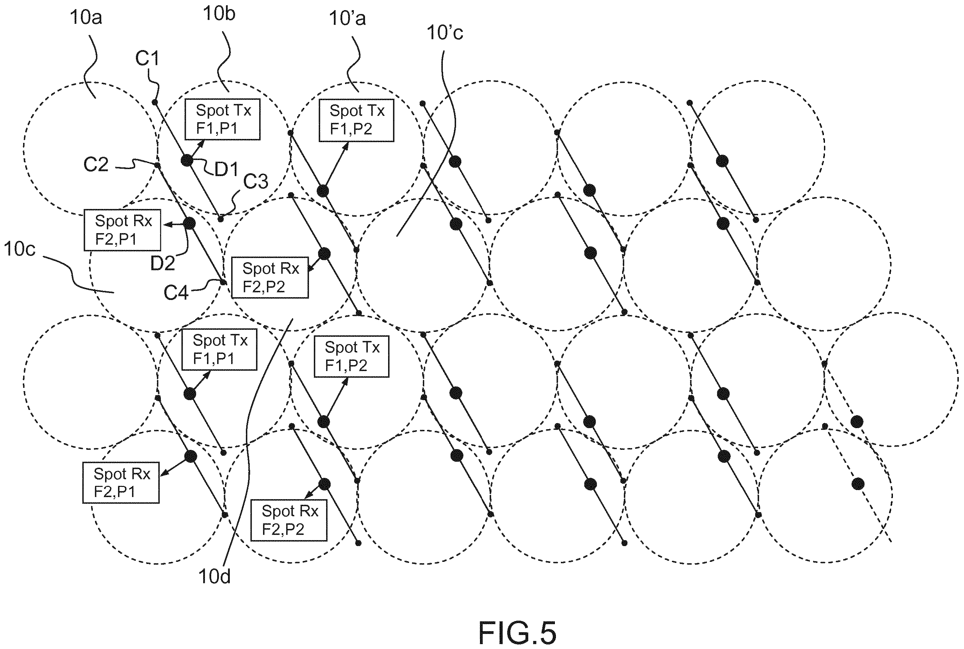

Un second niveau de distribution est représenté sur la figure 5. Le second niveau de distribution comporte des seconds circuits de distribution D1, D2 qui relient respectivement, deux à deux et selon la direction Y, pour chaque groupe G1 de quatre sources radiofréquence 10a, 10b, 10c, 10d, d'une part, les deux premiers ports d'émission T1a, T1b des première et seconde sources 10a, 10b reliés selon la direction X aux deux premiers ports d'émission T1c, T1d des troisième et quatrième sources radiofréquence reliés selon la direction X et d'autre part, les deux premiers ports de réception R1a, R1b des première et seconde sources radiofréquence 10a, 10b reliés selon la direction X aux deux premiers ports de réception R1c, R1d des troisième et quatrième sources radiofréquence 10c, 10d reliés selon la direction X. La sortie du circuit de distribution D1 est un port d'émission Tx d'un spot de fréquence F1 et de polarisation P1 et la sortie du circuit de distribution D2 est un port de réception Rx d'un spot de fréquence F2 et de polarisation P1. De même, pour chaque groupe de quatre sources, tous les ports de même fréquence et de même polarisation reliés deux à deux par les premiers circuits de distribution du premier niveau de distribution sont reliés entre eux par un circuit de distribution du deuxième niveau de façon à élaborer tous les spots d'émission et de réception de l'antenne. A l'émission les circuits de distribution fonctionnent en combineurs de signaux, à la réception, le fonctionnement du formateur de faisceau de l'antenne est inversé et les circuits de distribution fonctionnent en diviseurs de signaux.

Selon la direction U, chaque spot est réalisé par un groupe de quatre sources radiofréquence et deux spots adjacents sont réalisés par deux groupes adjacents décalés d'une seule source et qui partagent donc deux sources en commun. Cette configuration permet, avec une seule antenne et sans utiliser des circuits orthogonaux pour l'élaboration de deux faisceaux adjacents, d'obtenir un bon recouvrement des spots selon la direction U et une zone de couverture au sol, en émission et en réception, ne présentant pas de trous selon cette direction U. Selon la direction V, chaque spot est réalisé par un groupe de quatre sources radiofréquence et deux spots adjacents sont réalisés par deux groupes adjacents décalés de deux sources et qui ne partagent donc aucune source. les spots obtenus avec une seule antenne, ne se recouvrent pas selon la direction V et la zone de couverture au sol présente des trous selon cette direction V. Ce type de couverture au sol peut cependant être suffisante pour couvrir des territoires de forme allongée comme le Chili par exemple. Dans ce cas une seule antenne d'émission et de réception 21 peut être suffisante.

Concernant des territoires plus vastes s'étendant selon deux directions U et V de l'espace, deux antennes d'émission et de réception 21, 22 peuvent être nécessaires pour obtenir une couverture complète, comme représenté sur les figures 2a et 2b. Pour que la deuxième antenne 22 comble les trous de couverture, selon la direction V, de la première antenne 21, la direction de pointage 28 de la deuxième antenne 22 est décalée angulairement par rapport à la direction de pointage 27 de la première antenne 21. Le décalage angulaire de la direction de pointage des deux antennes l'une par rapport à l'autre correspond à un décalage, selon la direction V, des lignes de spots 2 formées au sol par la deuxième antenne 22 par rapport aux lignes de spots 1 formées par la première antenne 21, les directions de pointage 27, 28 des deux antennes étant identiques selon la direction U. Chaque antenne forme la totalité des spots en émission et en réception, selon la direction U et une ligne de spots sur deux selon la direction V. Le décalage des lignes de spots formées par la deuxième antenne 22 correspond approximativement au diamètre d'un spot, ce qui permet d'insérer, dans la direction V, une ligne de spots 2 supplémentaire entre deux lignes de spots 1 successives élaborés par la première antenne 21, d'obtenir ainsi un bon recouvrement entre les spots 1, 2 et de combler tous les trous de la couverture réalisée par les deux antennes d'émission et de réception.

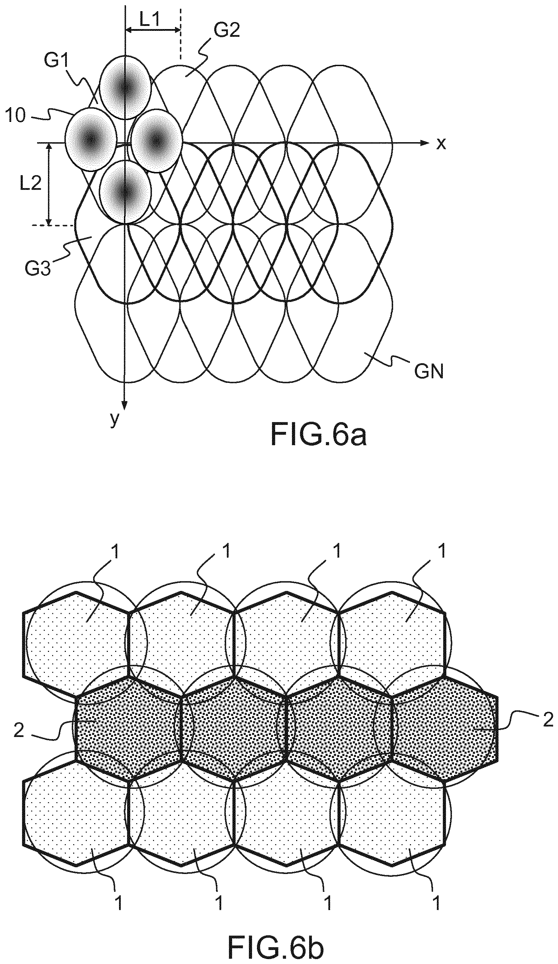

La figure 6a illustre un exemple de regroupement des sources radiofréquence 10 quatre par quatre dans le cas où les sources sont réparties en réseau selon une maille hexagonale, les deux directions X et Y faisant un angle de 90° entre elles. Dans cet exemple, deux groupes adjacents selon la direction X partagent une seule source radiofréquence et deux groupes adjacents selon la direction Y partagent également une seule source. Les deux groupes adjacents G1, G2 sont décalés d'un premier pas L1 correspondant à l'encombrement d'une seule source selon la première direction X de l'antenne et les deux groupes adjacents G1, G3 sont décalés d'un deuxième pas L2 correspondant à l'encombrement d'une seule source selon la deuxième direction Y de l'antenne, le pas L2 étant donc égal au pas L1. Un exemple de couverture obtenue avec la configuration de la figure 6a est représenté sur la figure 6b. Cette couverture est obtenue en utilisant deux antennes d'émission et de réception pour réaliser une couverture complète à l'émission et à la réception. Les spots 1 de la première et de la troisième ligne horizontale sont réalisés avec une première antenne, les spots 2 de la seconde ligne horizontale sont réalisés avec une deuxième antenne.

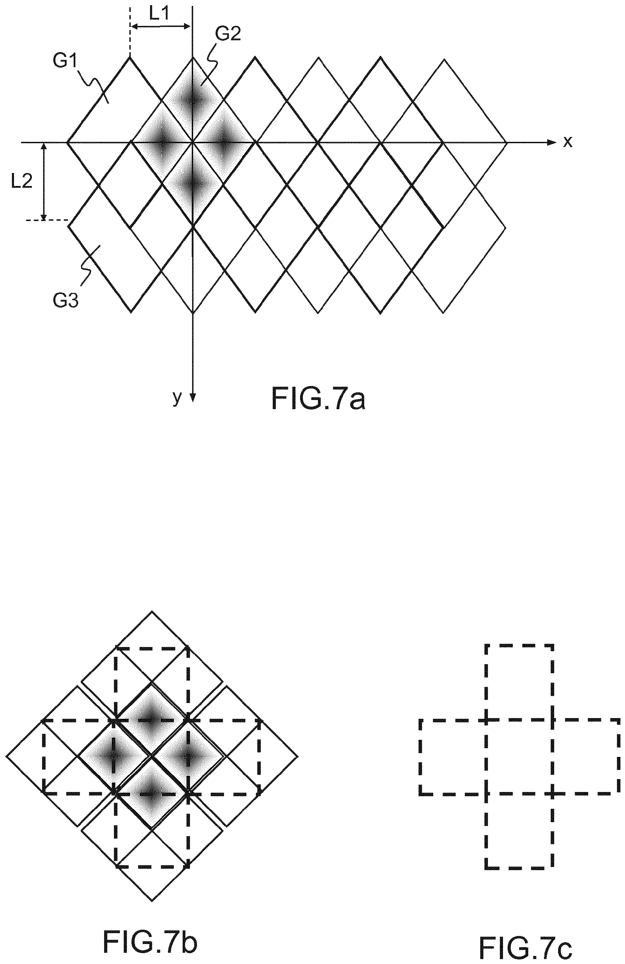

La figure 7a illustre un deuxième exemple de regroupement des sources radiofréquence 10 quatre par quatre dans le cas où les sources sont réparties en réseau selon une maille carrée, les deux directions X et Y faisant un angle de 90° entre elles. Dans ce deuxième exemple, deux groupes adjacents partagent une seule source radiofréquence, le partage étant réalisé entre les groupes adjacents selon la direction X et entre les groupes adjacents selon la direction Y. Comme dans le cas de la figure 6a, les deux groupes adjacents G1, G2 sont décalés d'un premier pas L1 correspondant à l'encombrement d'une seule source selon la première direction X de l'antenne, et les deux groupes adjacents G1, G3 sont décalés d'un deuxième pas L2 correspondant à l'encombrement d'une seule source selon la deuxième direction Y de l'antenne. Dans le cas d'une maille carrée, les éléments rayonnants peuvent être disposés plus proches les uns des autres que dans le cas d'une maille hexagonale, ce qui permet, pour une taille d'antenne identique, d'augmenter le nombre de sources et donc le nombre de spots au sol. Une seule antenne permet alors de réaliser une couverture complète à l'émission et à la réception. Les figures 7b et 7c illustrent un exemple d'antenne comportant un réseau à maille carrée et 16 sources regroupées en cinq groupes de quatre sources, chaque groupe partageant une source avec un groupe adjacent. Les cinq groupes de sources permettent de réaliser cinq spots à l'émission et cinq spots à la réception comme le montre la figure 7c illustrant la couverture correspondante.

Une couverture complète peut également être obtenue avec une seule antenne en utilisant un réseau rayonnant à maille hexagonale dont les groupes de sources adjacents partagent une seule source selon les directions X et Y mais avec des performances d'antenne dégradées.

## Revendications

1. Antenne d'émission et de réception multifaisceaux à plusieurs sources par faisceau comportant au moins un réflecteur et un réseau de plusieurs sources illuminant le réflecteur, les sources étant associées en plusieurs groupes décalés les uns par rapport aux autres selon deux directions X, Y d'un plan, chaque source comportant un élément rayonnant relié à une chaîne radiofréquence, **caractérisée en ce que** :
- chaque source (10, 10a, 10b, 10c, 10d, 10'a) comporte un premier (T1, T1a, T1b T1c T1d, T'1a) et un deuxième port d'émission (T2, T2a, T2b, T2c, T2d, T'2a) de même fréquence F1 et à polarisations (P1, P2) orthogonales entre elles et un premier (R1, R1a, R1b, R1c, R1d, R'1a) et un deuxième port de réception (R2, R2a, R2b, R2c, R2d, R'2a) de même fréquence F2 et à polarisations (P1, P2) orthogonales entre elles,
- les sources (10) sont associées par groupes de quatre sources adjacentes (10a, 10b, 10c, 10d) selon les directions X et Y,
- pour chaque groupe (G1 à GN) de quatre sources adjacentes (10a à 10d), les premiers (T1a à T1d) ou les deuxièmes (T2a à T2d) ports d'émission, et les premiers (R1a à R1d) ou les deuxièmes (R2a à R2d) ports de réception, correspondant à un même couple de valeur de fréquence et de polarisation (F1, P1), (F1, P2), (F2, P1), (F2, P2), sont reliés deux à deux selon la direction X puis deux à deux selon la direction Y, les quatre ports d'émission reliés entre eux formant un faisceau d'émission et les quatre ports de réception reliés entre eux formant un faisceau de réception.

2. Antenne selon la revendication 1, **caractérisée en ce que** deux groupes consécutifs adjacents (G1, G2) selon la direction X sont espacés d'un premier pas L1 correspondant à une source selon la direction X et partagent deux sources en commun, **en ce que** deux groupes consécutifs adjacents (G1, G3) selon la direction Y sont espacés d'un deuxième pas L2 correspondant à deux sources selon la direction Y et ne partagent aucune source en commun, chaque groupe de quatre sources (G1, G2, G3,..., GN) formant un faisceau d'émission et un faisceau de réception.

3. Antenne selon la revendication 1, **caractérisée en ce que** deux groupes consécutifs adjacents (G1, G2) selon la direction X sont espacés d'un premier pas L1 correspondant à une source selon la direction X et deux groupes consécutifs adjacents (G1, G3) selon la direction Y sont espacés d'un deuxième pas L2 correspondant à une source selon la direction Y, chaque groupe de quatre sources (G1, G2, G3,..., GN) formant un faisceau d'émission et un faisceau de réception,

4. Antenne selon l'une des revendications 1 à 3, **caractérisée en ce qu'**elle comporte en outre des circuits de distribution (C1, C3, D1), (C2, C4, D2) assurant les liaisons entre les ports d'émission ou entre les ports de réception d'un groupe de quatre sources, les circuits de distribution dédiés à la formation de faisceaux différents étant indépendants entre eux.

5. Antenne selon la revendication 2, **caractérisée en ce que** pour le premier (G1) des deux groupes de sources (10a à 10d), les premiers ports d'émission (T1a à T1d), respectivement les premiers ports de réception (R1a à R1d) de même polarisation, sont reliés deux à deux selon la direction X puis deux à deux selon la direction Y et **en ce que** pour le second (G2) des deux groupes de sources (10b, 10'a, 10d, 10'c), les seconds ports d'émission (T2b, T'2a, T2d, T'2c), respectivement les seconds ports de réception (R2b, R'2a, R2d, R'2c) de même polarisation, sont reliés deux à deux selon la direction X puis deux à deux selon la direction Y.

6. Système d'antennes d'émission et de réception à formation de faisceaux contigus, **caractérisé en ce qu'**il comporte deux antennes d'émission et de réception (21, 22) selon la revendication 1, les deux antennes d'émission et de réception (21, 22) ayant des directions de pointage (27, 28) identiques selon une première direction U de l'espace et décalées angulairement selon une deuxième direction V de l'espace.

7. Système d'antennes d'émission et de réception à formation de faisceaux contigus selon la revendication 6, **caractérisé en ce que** le décalage angulaire entre les directions de pointage (27, 28) des deux antennes d'émission et de réception (21, 22) correspond à un décalage, égal à un spot, des lignes de spots (2) formées au sol par les deux antennes (21, 22).

8. Système de télécommunication par satellite comportant au moins un système de deux antennes d'émission et de réception (21, 22) selon l'une des revendications 6 ou 7.

## Patentansprüche

1. Mehrfachstrahl-Sende- und Empfangsantenne mit mehreren Quellen pro Strahl, beinhaltend mindestens einen Reflektor und ein Netzwerk mehrerer Quellen, welche den Reflektor beleuchten, wobei die Quellen in mehreren Gruppen verbunden sind, welche in Bezug aufeinander in zwei Richtungen X, Y einer Ebene versetzt sind, wobei jede Quelle ein Abstrahlelement beinhaltet, welches mit einer Funkfrequenzkette verbunden ist, **dadurch gekennzeichnet, dass**:
- jede Quelle (10, 10a, 10b, 10c, 10d, 10'a) einen ersten (T1, T1a, T1b T1c T1d, T'1a) und einen zweiten Sendeanschluss (T2, T2a, T2b, T2c, T2d, T'2a) gleicher Frequenz F1 und mit Polarisationen (P1, P2) beinhaltet, welche rechtwinklig zueinander sind und einen ersten (R1, Ria, R1b, R1c, R1d, R'1a) und einen zweiten Empfangsanschluss (R2, R2a, R2b, R2c, R2d, R'2a) gleicher Frequenz F2 und mit Polarisationen (P1, P2), welche rechtwinklig zueinander sind,
- die Quellen (10) in Gruppen von vier aneinandergrenzenden Quellen (10a, 10b, 10c, 10d) in den Richtungen X und Y verbunden sind,
- für jede Gruppe (G1 bis GN) von vier aneinandergrenzenden Quellen (10a bis 10d), die ersten (T1a bis T1d) oder die zweiten (T2a bis T2d) Sendeanschlüsse, die ersten (R1a bis R1d) oder die zweiten (R2a bis R2d) Empfangsanschlüsse, welche einem gleichen Wertepaar von Frequenz und Polarisation (F1, P1), (F1, P2), (F2, P1), (F2, P2) entsprechen, jeweils paarweise in der Richtung X und anschließend paarweise in der Richtung Y verbunden sind, wobei die vier Sendeanschlüsse miteinander verbunden sind, wodurch sie einen Sendestrahl bilden und die vier Empfangsanschlüsse miteinander verbunden sind, wodurch sie einen Empfangsstrahl bilden.

2. Antenne nach Anspruch 1, **dadurch gekennzeichnet, dass** zwei aufeinanderfolgende aneinandergrenzende Gruppen (G1, G2) in der Richtung X um einen ersten Abstand L1 entfernt sind, welcher einer Quelle in der Richtung X entspricht und zwei gemeinsame Quellen teilen, dadurch, dass zwei aufeinanderfolgende aneinandergrenzende Gruppen (G1, G3) in der Richtung Y um einen zweiten Abstand L2 entfernt sind, welcher zwei Quellen in der Richtung Y entspricht und keine gemeinsame Quelle teilen, wobei jede Gruppe von vier Quellen (G1, G2, G3,..., GN) einen Sendestrahl und einen Empfangsstrahl bildet.

3. Antenne nach Anspruch 1, **dadurch gekennzeichnet, dass** zwei aufeinanderfolgende aneinandergrenzende Gruppen (G1, G2) in der Richtung X um einen ersten Abstand L1 entfernt sind, welcher einer Quelle in der Richtung X entspricht und zwei aufeinanderfolgende aneinandergrenzende Gruppen (G1, G3) in der Richtung Y um einen zweiten Abstand L2 entfernt sind, welcher einer Quelle in der Richtung Y entspricht, wobei jede Gruppe von vier Quellen (G1, G2, G3,..., GN) einen Sendestrahl und einen Empfangsstrahl bildet.

4. Antenne nach einem der Ansprüche 1 bis 3, **dadurch gekennzeichnet, dass** sie zusätzlich Verteilungskreise (C1, C3, D1), (C2, C4, D2) beinhaltet, welche die Verbindungen zwischen den Sendeanschlüssen oder zwischen den Empfangsanschlüssen einer Gruppe von vier Quellen gewährleistet, wobei die für die Bildung von unterschiedlichen Strahlen zuständigen Verteilungskreise unabhängig voneinander sind.

5. Antenne nach Anspruch 2, **dadurch gekennzeichnet, dass** für die erste (G1) der beiden Gruppen von Quellen (10a bis 10d), die ersten Sendeanschlüsse (T1a bis T1d), bzw. die ersten Empfangsanschlüsse (R1a bis R1d) gleicher Polarisation jeweils paarweise in der Richtung X und anschließend paarweise in der Richtung Y verbunden sind und dass bei der zweiten (G2) der beiden Gruppen von Quellen (10b, 10'a, 10d, 10'c), die zweiten Sendeanschlüsse (T2b, T'2a, T2d, T'2c), bzw. die zweiten Empfangsanschlüsse (R2b, R'2a, R2d, R'2c) gleicher Polarisation jeweils paarweise in der Richtung X und anschließend paarweise in der Richtung Y verbunden sind.

6. Sende- und Empfangsantennensystem mit Bildung von aneinandergrenzenden Strahlen, **dadurch gekennzeichnet, dass** es zwei Sende- und Empfangsantennen (21, 22) nach Anspruch 1 beinhaltet, wobei die beiden Sende- und Empfangsantennen (21, 22) gleiche Peilrichtungen (27, 28) in einer ersten Richtung U des Raums besitzen und winklig in einer zweiten Richtung V des Raums versetzt sind.

7. Sende- und Empfangsantennensystem mit Bildung von aneinandergrenzenden Strahlen nach Anspruch 6, **dadurch gekennzeichnet, dass** der Winkelversatz zwischen den Peilrichtungen (27, 28) der beiden Sende- und Empfangsantennen (21, 22) einem Versatz gleich einem Spot der Linien von Spots (2), die am Boden durch die beiden Antennen (21, 22) gebildet werden, entspricht.

8. Satelliten-Telekommunikationssystem, beinhaltend mindestens ein System mit zwei Sende- und Empfangsantennen (21, 22) nach einem der Ansprüche 6 oder 7.

## Claims

1. Multibeam transmitting and receiving antenna with multiple feeds per beam comprising at least one reflector and one array of several feeds illuminating the reflector, the feeds being clustered into several groups offset with respect to each other in two directions X, Y of a plane, each feed comprising a radiating element connected to a radiofrequency channel, **characterized in that**:
- each feed (10, 10a, 10b, 10c, 10d, 10'a) comprises a first (T1, T1a, T1b, T1c, T1d, T'1a) and a second transmitting port (T2, T2a, T2b, T2c, T2d, T'2a) having a same transmission frequency F1 and polarizations (P1, P2) orthogonal to each other and a first (R1, R1a, R1b, R1c, R1d, R'1a) and second receiving port (R2, R2a, R2b, R2c, R2d, R'2a) having a same reception frequency F2 and polarizations (P1, P2) orthogonal to each other,
- the feeds (10) are clustered by groups of four adjacent feeds (10a, 10b, 10c, 10d) in the directions X and Y,
- for each group (G1 to GN) of four adjacent feeds (10a to 10d), the first (T1a to T1d) or the second (T2a to T2d) transmitting ports, and the first (R1a to R1d) or the second (R2a to R2d) receiving ports, corresponding to a same pair of frequency and polarization values (F1, P1), (F1, P2), (F2, P1,), (F2, P2) are connected two-by-two in the direction X then two-by-two in the direction Y, the four interconnected transmitting ports forming a transmitting beam and the four interconnected receiving ports forming a receiving beam.

2. Antenna of Claim 1, **characterized in that** two consecutive adjacent groups (G1, G2) in the direction X are spaced by a first pitch L1 corresponding to a feed in the direction X and share two feeds in common, and wherein two consecutive adjacent groups (G1, G3) in the direction Y are spaced by a second pitch L2 corresponding to two feeds in the direction Y and do not share any feed in common, each group of four feeds (G1, G2, G3, ..., GN) forming a transmitting beam and a receiving beam.

3. Antenna of Claim 1, **characterized in that** two consecutive adjacent groups (G1, G2) in the direction X are spaced by a first pitch L1 corresponding to a feed in the direction X and two consecutive adjacent groups (G1, G3) in the direction Y are spaced by a second pitch L2 corresponding to a feed in the direction Y, each group of four feeds (G1, G2, G3,..., GN) forming a transmitting beam and a receiving beam.

4. Antenna according to one of Claims 1 to 3, **characterized in that** it further comprises distribution circuits (C1, C3, D1), (C2, C4, D2) ensuring the connections between the transmitting or receiving ports of a group of four feeds, the distribution circuits dedicated to the forming of different beams being independent from each other.

5. Antenna of Claim 2, **characterized in that** for the first (G1) of the two groups of feeds (10a to 10d), the first transmitting ports (T1a to T1d), respectively the first receiving ports (R1a to R1d) having the same polarization, are connected two-by-two in the direction X then two-by-two in the direction Y and **in that** for the second (G2) of the two groups of feeds (10b, 10'a, 10d, 10'c), the second transmitting ports (T2b, T'2a, T2d, T'2c), respectively the second receiving ports (R2b, R'2a, R2d, R'2c) having the same polarization, are connected two-by-two in the direction X then two-by-two in the direction Y.

6. System of transmitting and receiving antennas with formation of contiguous beams, **characterized in that** it comprises two transmitting and receiving antennas (21, 22) according to Claim 1, the two transmitting and receiving antennas (21, 22) having identical directions of alignment (27, 28) in a first direction U in space and angularly offset in a second direction V in space.

7. System of transmitting and receiving antennas with formation of contiguous beams of Claim 6, **characterized in that** the angular offset between the directions of alignment (27, 28) of the two transmitting and receiving antennas (21, 22) corresponds to an offset, equal to one spot, of the lines of spots (2) formed on the ground by the two antennas (21, 22).

8. Satellite telecommunication system comprising at least one system of two transmitting and receiving antennas (21, 22) according to one of Claims 6 or 7.
